# EUROPEAN PATENT APPLICATION

(11) **EP 1 760 609 A1**
(43) Date of publication of application: **07.03.2007**
(21) Application number: 05745636.0
(22) Date of filing: 02.06.2005
(51) Int. Cl.: G06F 17/28

(54) **WEB PAGE TRANSLATION DEVICE AND WEB PAGE TRANSLATION METHOD**

(30) Priority: 07.06.2004 JP 2004169042
(71) Applicant: Impulse Japan Inc., Tokyo 136-0071 (JP)
(72) Inventor: SUZUKI, Takamasa, IMPULSE JAPAN INC., Koto-ku, Tokyo 1360071 (JP)
(74) Representative: Viering, Hans-Martin
(86) International application number: PCT/JP2005/010181
(87) International publication number: WO 2005/122005

(57) **Abstract**

A WEB page translation method includes a description language identification means 33 for discriminating whether the translation target portion of the WEB page accessed by a user via a terminal device 1 is described in HTML, a first translation means 35 for translating the character string displayed on the WEB page into another language on a translation target portion discriminated to be described in HTML by the description language identification means 33, and a second translation means 36 for translating the character string displayed on the WEB page into another language on a translation target portion discriminated to be described not in HTML by the description language identification means 33.

## Description

### Technical Field

The present invention relates to, for example, a WEB translation apparatus and a WEB page translation method for use in a translation server for translating contents of a WEB (World Wide Web) page accessed by a user on the Internet written in another language into a user's language.

### Background Art

In recent years, the Internet is widely recognized and has become popular as one of information gathering techniques.

However, in cases where the WEB page accessed by the user on the Internet is displayed in a language different from the language used by the user, the user cannot understand the contents.

Therefore, it is performed that the WEB page displayed in a language different from the language used by the user is translated at a translation server and the WEB page reflecting the translated results is displayed on a user' s terminal device. (see, e.g., Japanese Unexamined Laid-open Patent Publication No. 2000-330992).

In the meantime, conventionally, a WEB page was created in a description language called HTML(HyperText Markup Language) which is a common language for transmitting information of the hypertext document on the WWW. Recently, for the purposes of improving the appearance and/or transmitting any information from a user side, description languages other than HTML, such as, e.g. , a javascript, has become popular to be used together with HTML or independently.

By using a description language other than HTML as mentioned above, various effects can be given to a homepage.

For example, it becomes possible to colorfully change the background of the screen, etc. , display messages which change with time, enable inputting of a password or writing to a bulletin board by a user, or select a link from a pull down menu.

Despite the increased use of a language other than HTML as mentioned above, however, a conventional WEB page translation apparatus could not translate a portion described in a description language other than HTML.

The present invention aims to provide a WEB page translation apparatus and a translation method capable of translating a portion described in a description language other than HTML as well as a portion described in HTML.

### Disclosure of Invention

The present invention provides the following means to solve the aforementioned objects.

[1] A WEB page translation apparatus, comprising:
   a description language identification means configured to discriminate whether a translation target portion of a WEB page accessed by a user via a terminal device is described in HTML;
   a first translation means configured to translate the character string displayed on the WEB page into another language about the translation target portion discriminated to be described in HTML by the description language identification means; and
   a second translation means configured to translate the character string displayed on the WEB page into another language about the translation target portion discriminated not to be described in HTML by the description language identification means.

According to this invention, in a WEB page, as to the translation target portion discriminated to be described in HTML by the description language identification means, it is translated into another language by the first translation means. As to the translation target portion discriminated not to be described in HTML, it is translated into another language by the second translation means. Therefore, a translation apparatus which can translate not only the portion described in HTML in a traditional way, but also can translate the portion described in a language other HTML.

[2] The WEB page translation apparatus as recited in the aforementioned Item 1, further comprising:
a reconstruction means configured to reconstruct the WEB page reflecting the translation result by the first translation means and the second translation means; and
a display control means configured to display the reconstructed WEB page on a display screen of the user terminal.

According to this invention, it is further provided with a reconstruction means for reconstructing the WEB page reflecting the translation result by the first translation means and the second translation means and a display control means for displaying the reconstructed WEB page on the display screen of the user terminal.

[3] The WEB page translation apparatus as recited in the aforementioned Item 1 or 2, further comprising a user information reflection means configured to deliver information to be given by a user to the portion translated by the second translation means to the access destination in the same condition as giving information in an original WEB page in the WEB page reconstructed and displayed on the display screen of the user terminal.

According to this invention, it is further provided with a user information reflection means for delivering information to be given by a user to the portion translated by the second translation means to the access destination in the same condition as giving information in an original WEB page in the WEB page reconstructed and displayed on the display screen of the user terminal. Therefore, the information given by the user to the portion described in a description language other than HTML can be delivered to the WEB page provider side of an access destination in the same condition as giving information on the original WEB page. Therefore, a user can input various kinds of information with the same feeling as operating the original WEB page, without caring about the difference in language.

[4] The WEB page translation apparatus as recited in the aforementioned Item 3, wherein the information given by the user to the portion translated by the second translation means is information on selecting a desired menu from a plurality of menus by specifying a selection button or a selection box provided on the screen of the user terminal corresponding to each menu.

According to this invention, by specifying the selection button or the selection box provided corresponding to each menu on the screen of the user terminal, a user can select a desired menu from a plurality of menus, without caring about a difference in language.

[5] The WEB page translation apparatus as recited in the aforementioned Item 3, wherein the information given by the user to the portion translated by the second translation means is information on selecting a desired menu from a plurality of menus by directly specifying each menu on the screen of the user terminal.

According to this invention, by directly specifying the each menu on the screen of the user terminal, a user can select a desired menu from a plurality of menus, without caring about a difference in language.

[6] The WEB page translation apparatus as recited in the aforementioned Item 3, wherein the information given by the user to the portion translated by the second translation means is information about the character inputting on the screen of the user terminal.

According to the invention, when a user inputs characters on the screen of the user terminal, they will be delivered to the access destination in a proper condition. Therefore, the user can input in his/her own language, without caring about a difference in language.

[7] A WEB page translation method, comprising:
a step of discriminating whether a translation target portion of a WEB page accessed by a user via a terminal device is described in HTML;
a first translation step of translating the character string displayed on the WEB page into another language about the translation target portion discriminated to be described in HTML; and
a second translation step of translating the character string displayed on the WEB page into another language about the translation target portion discriminated not to be described in HTML.

According to this invention, in a WEB page, as to the translation target portion discriminated to be described in HTML by the description language identification means, it is translated into another language at the first translation step. As to the translation target portion discriminated not to be described in HTML, it is translated into another language at the second translation step. Therefore, a translation apparatus which can translate not only the portion described in HTML in a traditional way, but also can translate the portion described in a language other HTML.

[8] The WEB page translation method as recited in the aforementioned Item 7, further comprising:
a step of reconstructing the WEB page reflecting the translation result by the first translation step and the second translation step; and
a step of displaying the reconstructed WEB page on a display screen of the user terminal.

According to this invention, since the WEB page reflecting the translation result at the first translation step and the second translation step is reconstructed and the reconstructed WEB page is displayed on the display screen of the user terminal, the user can brows the WEB page, without caring about a difference in language.

[9] The WEB page translation method as recited in the aforementioned Item 7 or 8, further comprising a step of delivering information to be given by a user to the portion translated at the second translation step to the access destination in the same condition as giving information in an original WEB page in the WEB page reconstructed and displayed on the display screen of the user terminal.

According to this invention, in the WEB page reconstructed and displayed on the display screen of the user terminal, the information given by the user to the portion described in a description language other than HTML can be delivered to the WEB page provider side in the same condition as giving information on the original WEB page. Therefore, a user can input various kinds of information with the same feeling as operating the original WEB page, without caring about the difference in language.

[10] The WEB page translation method as recited in the aforementioned Item 9, wherein the information given by the user to the portion translated at the second translation step is information on selecting a desired menu from a plurality of menus by specifying a selection button or a selection box provided on the screen of the user terminal corresponding to each menu.

According to this invention, by specifying the selection button or the selection box provided corresponding to each menu on the screen of the user terminal, a user can select a desired menu from a plurality of menus, without caring about a difference in language.

[11] The WEB page translation method as recited in the aforementioned Item 9, wherein the information given by the user to the portion translated at the second translation step is information on selecting a desired menu from a plurality of menus by directly specifying each menu on the screen of the user terminal.

According to this invention, by directly specifying the each menu on the screen of the user terminal, a user can select a desired menu from a plurality of menus, without caring about a difference in language.

[12] The WEB page translation method as recited in the aforementioned Item 9, wherein the information given by the user to the portion translated at the second translation step is information about the character inputting on the screen of the user terminal.

According to this invention, by directly specifying the each menu on the screen of the user terminal, a user can select a desired menu from a plurality of menus, without caring about a difference in language.

### Brief Description of Drawings

Fig. 1 is a block diagram showing a schematic structure of a WEB page translation system according to an embodiment of this invention.
Fig. 2 is a flow chart showing an operation of a translation server used in the WEB page translation system shown in Fig. 1.
Fig. 3 is a flow chart showing contents of a first translation processing S6 in Fig. 2.
Fig. 4 is a flow chart showing contents of a second translation processing S7 in Fig. 2.
Fig. 5 is a flow chart showing contents of a second translation processing S16 in Fig. 2.
Fig. 6 is a flow chart showing contents of language identification processing in the flow chart of Figs. 3 to 5.
Figs. 7(a) and 7(b) are figures showing an example of a character code table.
Fig. 8(a) shows an example of an original portion of the WEB page described in a language other than HTML, and Fig. 8(b) shows the translation.
Fig. 9(a) shows another example of an original portion of the WEB page described in a language other than HTML, and Fig. 9(b) shows the translation.
Fig. 10(a) shows still another example of an original portion of the WEB page described in a language other than HTML, and Fig. 10(b) shows the translation.

### Best Mode for Carrying Out the Invention

Hereinafter, an embodiment of the present invention will be explained.

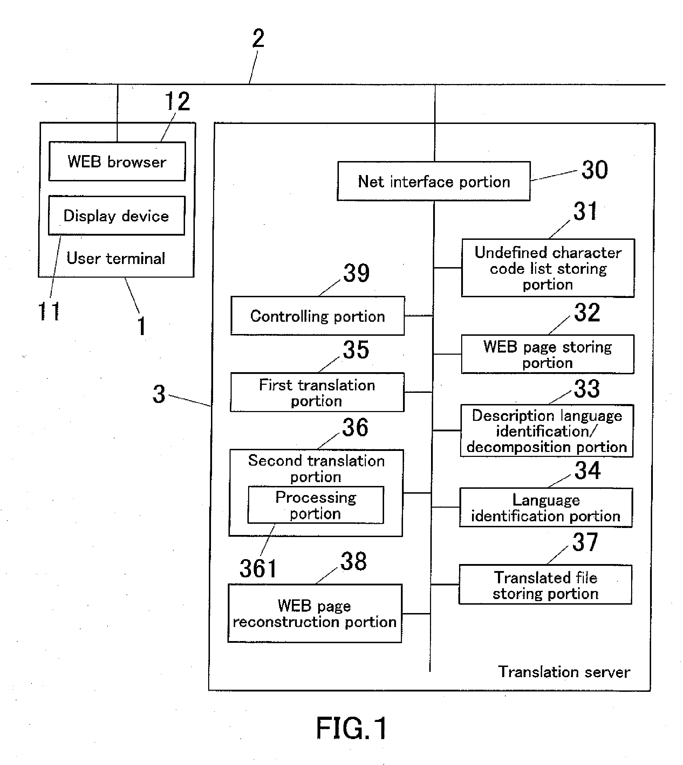

Fig. 1 is a block diagram showing a schematic structure of a WEB page translation system in which a translation server as a translation apparatus is used according to an embodiment of the present invention.

In Fig. 1, the reference numeral "1" denotes a terminal device, such as, e. g. , a personal computer (hereinafter referred to as "user terminal".) This user terminal 1 is provided with a display device 11 having, e.g., a liquid display, and configured to be connected by the WEB browser 12 to a translation server 3 via the Internet 2.

The translation server 3 is provided with a net interface portion 30, an undefined character code list storing portion 31, a WEB page storing portion 32, a description language identification/decomposition portion 33, a language identification portion 34, a first translation portion 35, a second translation portion 36, a translated file storing portion 37, a WEB page reconstruction portion 38, and a controlling portion 39.

The net interface portion 30 functions as an input/output portion which connects the Internet 2 to the translation server 3.

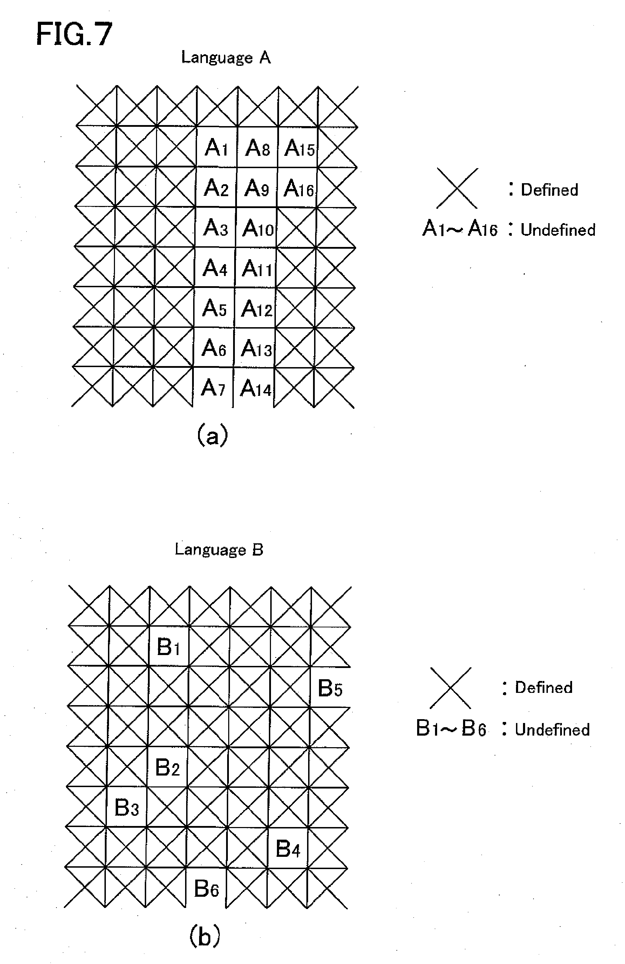

In the undefined character code list storing portion 31, lists of undefined character codes to which no character is allotted in a character code table are previously stored each of a plurality of languages. For example, as to the language A shown in Fig. 7(a), undefined character codes A1-A16 in the character code table are previously stored as an undefined character code list. Furthermore, as to the language B shown in Fig. 7(b), undefined character codes B1-B6 in the character code table are stored as an undefined character code list. As to other languages, in the same manner as mentioned above, an undefined character code list is previously stored. Although it is ideal that undefined character code lists about all of the languages used on the Internet are stored, it is acceptable that at least major languages are stored.

The WEB page storing portion 32 stores contents of a WEB page having an address specified by the user with an URL (Uniform Resource Locator) at the user terminal 1.

The description language identification/decomposition portion 33 analyzes the tag of the description language of the WEB page stored in the WEB page storing portion 32, and decomposes it into a description language portion described in HTML and a description language portion described in a language other than HTML from the analysis output. In this embodiment, JavaScript shall be used as a description language other than HTML.

The language identification portion 34 automatically identifies the language of the character string displayed on the WEB page stored in the WEB page storing portion 32. The concrete identification processing will be explained later.

The first translation portion 35 is configured to translate the description portion described in HTML identified and decomposed by the description language identification/decomposition portion 33. The first translation portion 35 is provided with a plurality of translation engines corresponding to each language, and translates the character string of the WEB page whose language was identified by the language identification portion 34 into a language used by the user. For example, in cases where it is discriminated that the HTML description portion of the WEB page accessed by a Japanese user is an English page, the contents of the portion will be translated into Japanese. In the case of Chinese, Chinese will be translated into Japanese.

The second translation portion 36 is configured to translate the description portion described in JavaScript, which is a description language other than HTML, and identified and decomposed by the description language identification/decomposition portion 33. This second translation portion 36 is provided with a plurality of translation engines corresponding to each language like the first translation portion, and translates the character string of the WEB page whose language was identified by the language identification portion 34 into a user's language.

The second translation portion is provided with a processing portion 361. The processing portion 361 performs processing for delivering the information to be given by a user to the portion translated by the second translation means to an access destination in the same condition as giving information on the original WEB page on a translated WEB page displayed on the display device 11 of the user terminal 1.

Examples of the information to be given by a user to the portion translated by the second translation portion 36 include information about selecting a desired menu from a plurality of menus by specifying a selection button or a selection box provided on the screen of a user terminal corresponding to each menu.

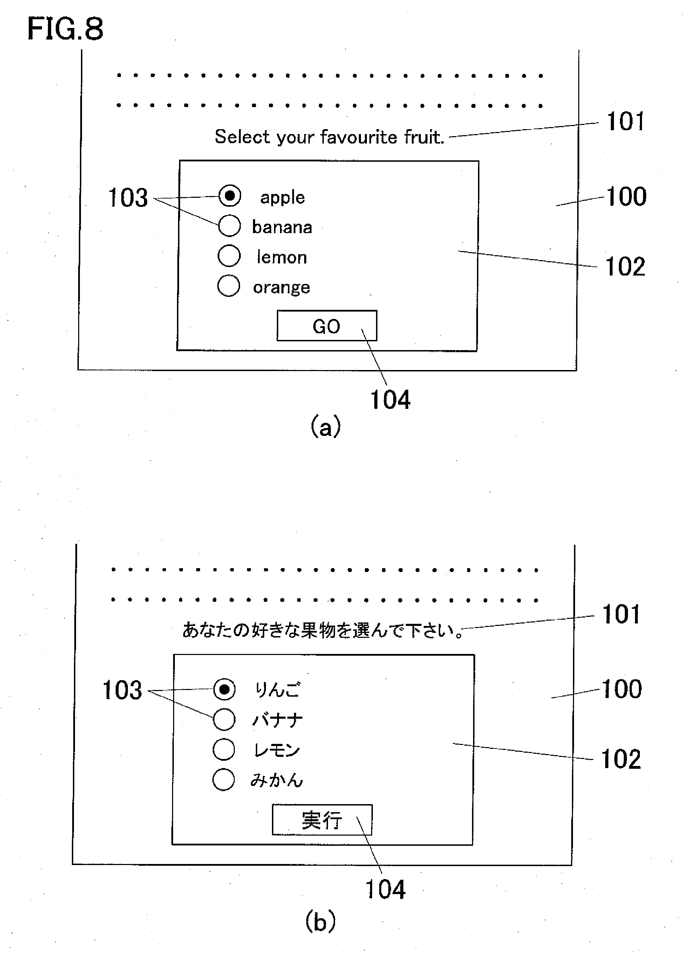

A concrete example is shown in Fig. 8(a). In this case, there is a character string 101 of "Select your favorite fruit" described in JavaScript on the original WEB page 100. When a cursor is pointed to the character string, the pull down menu 102 of "apple, " "banana," "lemon," and "orange" will be displayed together with selection buttons 103 or selection boxes (check boxes) located ahead of each menu. After clicking the selection button 103 or the selection box to select any one of the menus, the user presses the "GO" button 104 to transmit the selected content.

In this case, the second translation portion 36 of the translation server 3 translates the character string 101 of "Select your favorite fruit." into 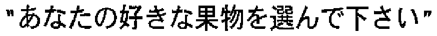 as shown in Fig. 8(b). Also, it translates each menu of "apple," "banana," "lemon," and "orange" into 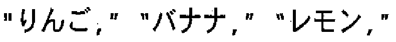 and 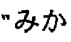 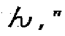 respectively, and further translates "GO" into 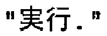

At this time, the processing portion 361 embeds the same parameter as the parameter used in the original WEB page about each menu in the translated WEB page. Furthermore, the processing portion 361 correlates the translated character of 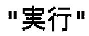 with the parameter to be delivered to the original WEB page, and embeds it in the translated WEB page (the same will be applied to the "next" button). With this, when a certain menu is chosen from the translated menus and the 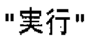 button is pushed, it is configured to recognize that the certain menu was selected from "apple," "banana," "lemon," and "orange" via the corresponding parameter.

Examples of the information to be given by a user to the portion translated by the second translation portion 36 include information about selecting a desired menu from a plurality of menus by directly specifying each menu on the screen of the user terminal 1.

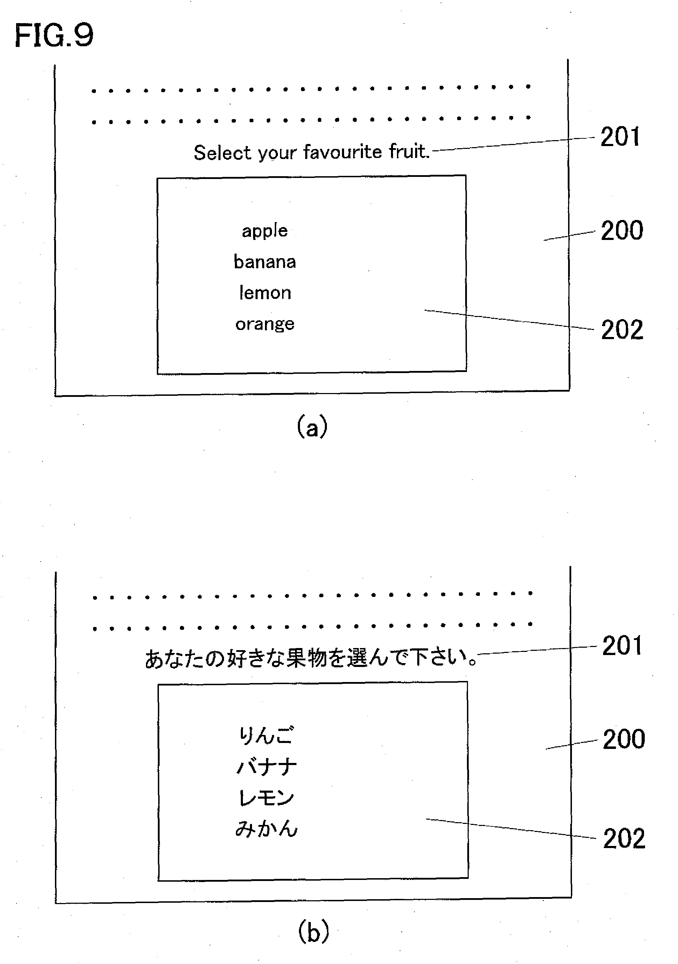

A concrete example is shown in Fig. 9(a). In this case, there is a character string 201 of "Select your favorite fruit" described in JavaScript on the original WEB page 200. When a cursor is pointed to the character string, the pull down menu 202 of "apple, " "banana," "lemon," and "orange" will be displayed. After pointing the cursor to the desired menu, the user clicking the desired menu to transmit the selected content.

In this case, the second translation portion 36 of the translation server 3 translates the "Select your favorite fruit." into 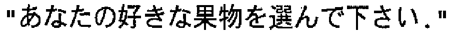 Also it translates "apple," "banana," "lemon," and "orange" into 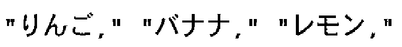 and 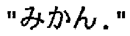

At this time, the processing portion 361 embeds the same parameter as the parameter used in the original WEB page about each menu in the translated WEB page. Furthermore, the processing portion 361 correlates the translated character of 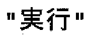 with the parameter to be delivered to the original WEB page, and embeds it in the translated WEB page (the same will be applied to the "next" button). With this, when a certain menu is chosen from the translated menus and the 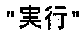 button is pushed, it is configured to recognize that the certain menu was selected from "apple," "banana," "lemon," and "orange" via the corresponding parameter.
At this time, the processing portion 361 correlates the parameter of each menu of the original WEB page with the translated contents of each menu and embeds it in the translated WEB page. With this , when the translated certainmenu is chosen, it is configured to recognize that the corresponding menu among "apple," "banana," "lemon," and "orange" in the original is selected.

Examples of the information to be given by a user to the portion translated by the second translation portion 36 include information about character inputting on the screen of the user terminal 1.

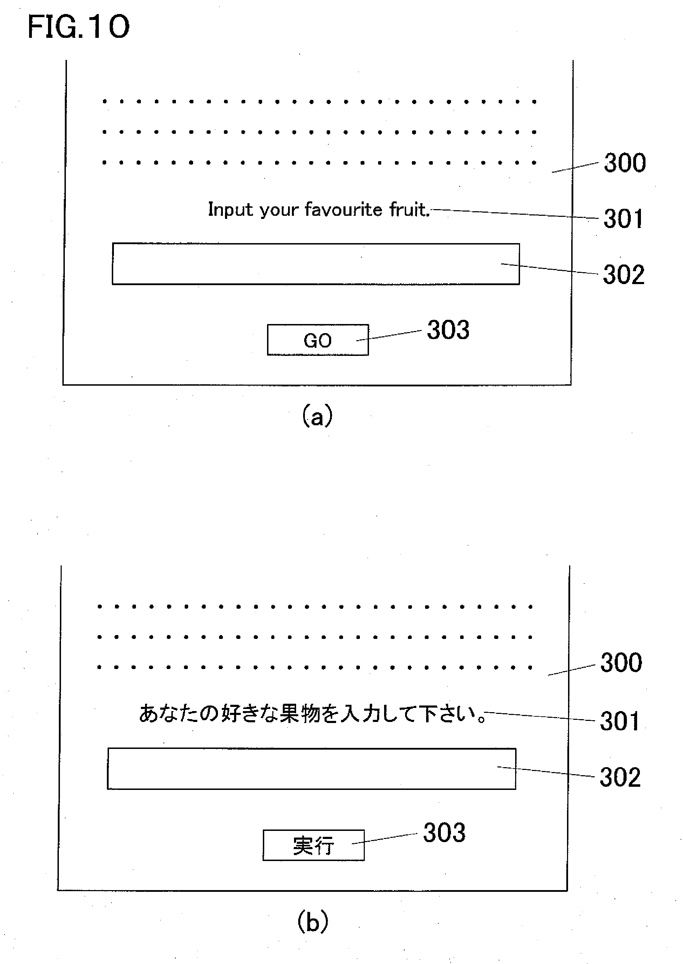

A concrete example is shown in Fig. 10. In this case, there is a character string 301 of "Input your favorite fruit" described in JavaScript on the original WEB page 300. When a cursor is pointed to the character string, a character input column 302 and the "GO" button will be displayed. After inputting the name of a desired fruit, the user presses the "GO" button to transmit the selected content.

In this case, the second translation portion 36 of the translation server 3 translates "Input your favorite fruit" into 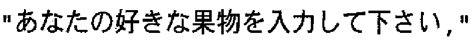 and translates "GO" into 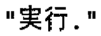

When the user inputs a favorite fruit into the character input column and pushes the 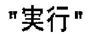 button, the language identification portion 34 identifies the language of the characters inputted by the user, and the second translation portion 36 translates the contents inputted by the user into the original language, so that it can recognize the user's inputted contents.

The translated file storing portion 37 saves the translation results by the first and second translation portions 35 and 36.

The WEB page reconstruction portion 38 refers to the original WEB page stored in the WEB page storing portion 32 and reconstructs the WEB page reflecting the translation results saved in the translated file storing portion 37.

The controlling portion 39 integrally controls the entire translation server 3. For example, the controlling portion 39 makes the WEB page storing portion 32 take in the WEB page having the URL specified by the user and store it, makes the description language identification portion 33, the language identification portion 34 and the translation portions 35 and 35 identify or translate, makes the translated file storing portion 37 store the translated file, makes the WEB page reconstruction portion 38 reconstruct the WEB page reflecting the translation results , transmits the reconstructed WEB page to the user terminal 1 to display it, and also transmits the information given by the user on the translated WEB page to the WEB page provider side (the user's access destination).

Next, the operation of the translation server 3 in the WEB page translation system shown in Fig. 1 will be explained.

After accessing the translation server A from the user terminal 1, the user specifies a URL. The controlling portion 39 of the translation server 3 discriminates whether a URL is specified. If not specified (NO at S1), the processing terminates. If a URL is specified (YES at S1), after acquiring the contents of the WEB page specified by the URL through the Internet 2 and the net interface portion 30 at S2, the controlling portion 39 stores the contents of the acquired WEB page in the WEB page storing portion 32 at S3.

Next, at S4, the description language identification/decomposition portion 33 identifies the description language of the WEB page, and decomposes it into the HTML portion and the JavaScript portion.

Next, at S5, it is discriminated whether the translation target portion is described in HTML. If described in HTML (YES at S5), after performing the first translation processing at S6, the routine proceeds to S8. When the translation target portion is described in JavaScript (NO at S5), after performing the second translation processing at S7, the routine proceeds to S8. Each of the first and second translation processing will be explained later.

At S8, after saving the translation result in the translated file storing portion 38, it is discriminated whether the translation is completed at S9.

If the translation has not been completed (NO at S9), returning to S5, the operation of S5 to S9 will be repeated. After completion of the translation (YES at S9), at S10, the WEB page reconstruction portion 38 reconstructs the WEB page into a WEB page in which the character string is translated based on the contents of the WEB page stored in the WEB page storing portion 32 and the translated file saved in the translated file storing portion 37.

At S11, after transmitting the contents of the reconstructed WEB page to the user terminal 1 via the net interface portion 30, the controlling portion discriminates whether the information was given from the user to the translated WEB page at S12.

If the information from the user is not given (NO at S12), the routine terminates. If the information from a user is given (YES at S12), it is discriminated whether the information given by the user is caused by selection of a menu at S13. If it is caused by the selection of a menu (YES at S13), at S14, the contents of the selected menu are transmitted to the WEB page provide side, and the processing terminates. In this case, since the translated menu and the original menu are related by the parameter, Even if the user selects the translated menu, the same proper contents as the contents which are selected on the original WEB page will be transmitted to the WEB page provider side.

On the other hand, at S13, if the information giving by the user is not caused by selecting the menu (NO at S13), at S15, it is discriminated at S15 whether information giving is caused by the character inputting by the user. If not the character inputting (NO at S15), the processing terminates. If it was the character inputting (YES at S15), after performing the third translation processing at S16, the translation result, i.e., the contents in which the user inputted the characters are transmitted to the WEB page provider side, and the processing terminates.

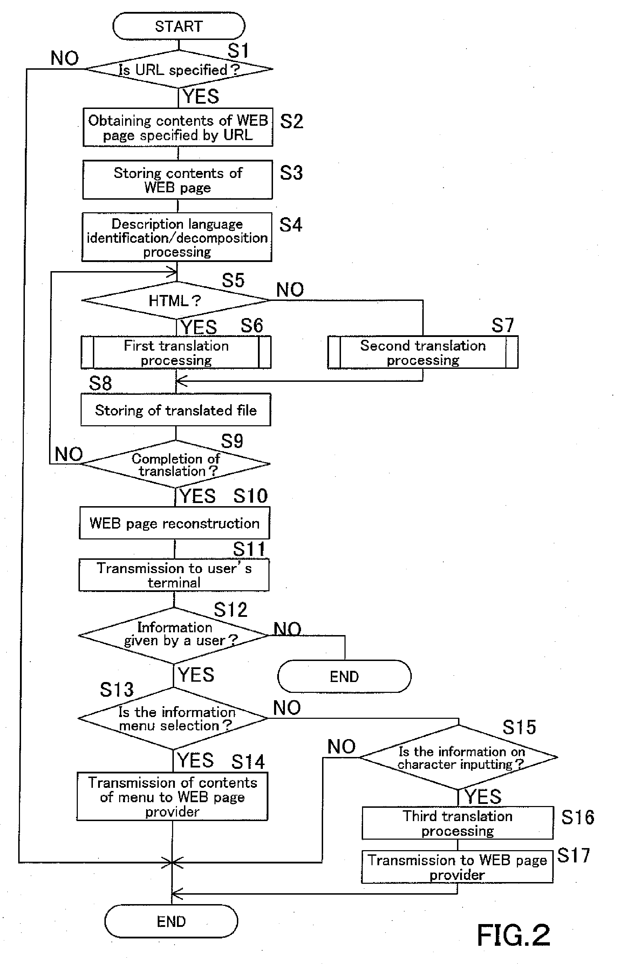

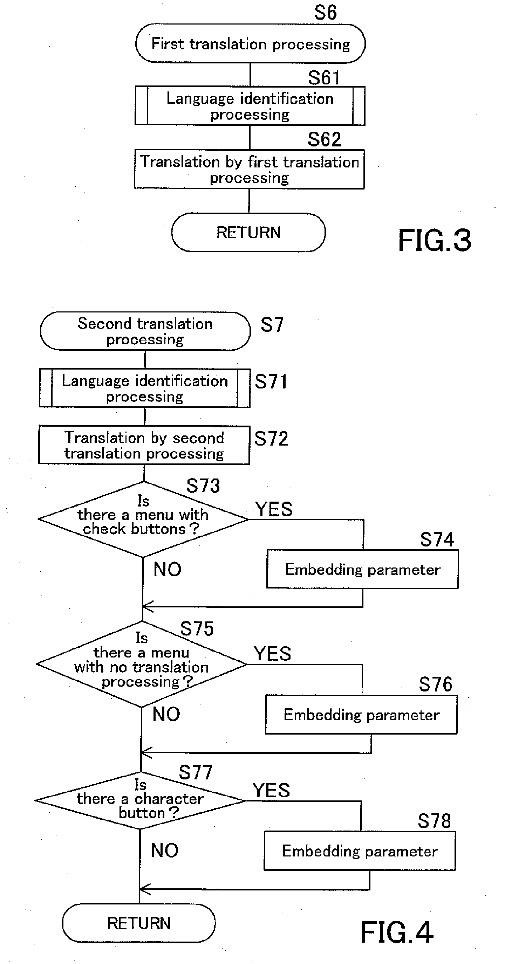

Fig. 3 is a flow chart showing the contents of the first translation processing S6 in Fig. 2.

At S61, the language identification portion 34 performs the language identification processing to identify the original language. At S62, the first translation portion 35 translates the original language into the user's language, and the routine returns.

Fig. 4 is a flowchart showing the contents of the second translation processing S7 in Fig. 2.

At S71, the language identification portion 34 performs the language identification processing to identify the original language. At S72, the second translation portion 36 translates the original language into a user's language.

At S73, it discriminated whether a pull down menu with check buttons 103 or check boxes as shown in Fig. 8(a) exists. If such a pull down menu does not exist (NO at S73), the routine proceeds to S75. If it exists (YES at S73), at S74, the aforementioned parameter for connecting the original menu selection and the translated menu selection is embedded, and the routine proceeds to S75.

At S75, it is discriminated whether a pull down menu without check buttons oar check boxes as shown in Fig. 9 exists. It such a pull down menu does not exist (NO at S75), the routine proceeds to S77. If it exists (YES at S75), at S76, the aforementioned parameter for connecting the original menu selection and the translated menu selection is embedded, and the routine proceeds to S77.

At S77, it discriminated whether a character display button, such as, e.g. , a "GO" button 104 and 303 as shown in Fig. 8 or Fig. 10 exists. If such a character display button does not exist (NO at S77), the routine returns. If it exists (YES at S77), at S78, the aforementioned parameter for connecting the original menu selection and the translated menu selection is embedded, and the routine returns.

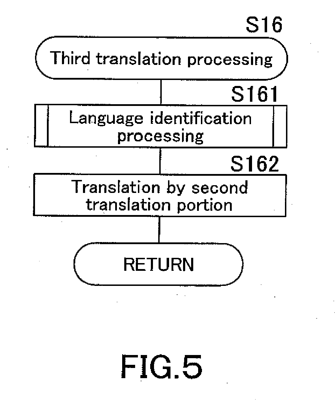

Fig. 5 is a flowchart showing the contents of the third translation processing S16 in Fig. 2.

At S161, after performing the language identification processing, the language identification portion 34 identifies the language of the character string inputted by the user. After translating the character string by the user into the original language, the second translation portion 36 translates the character string by the user into the original language at S162, and then the routine returns.

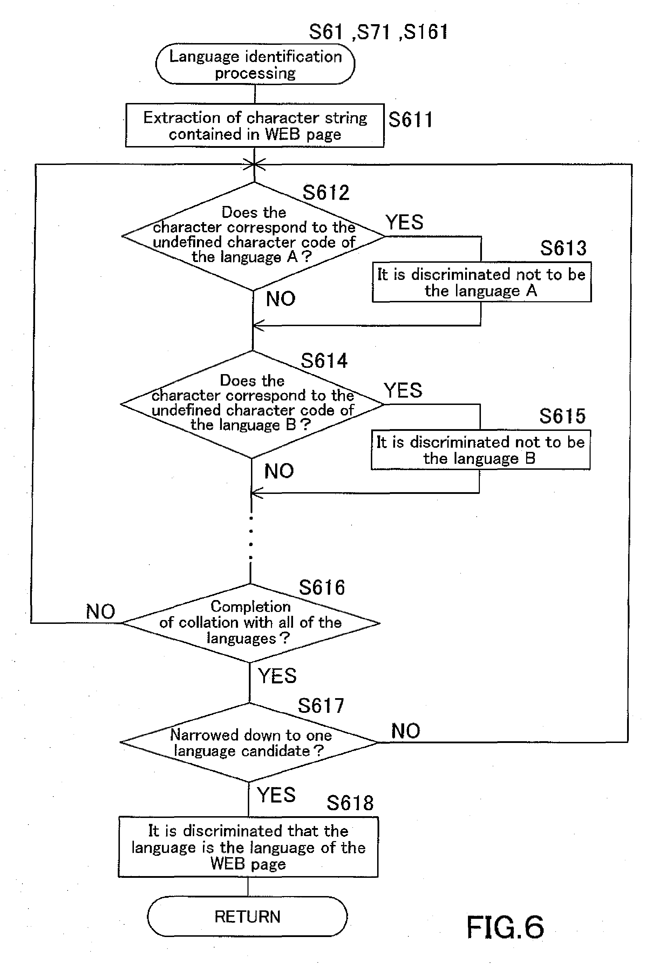

Fig. 6 is a flowchart showing the contents of the language identification processing of S61, S71, and S161 in the flowchart of Figs. 3 to 5.

After extracting the character string used in the translation target WEB page at S611, the language identification portion 34 discriminates whether the character code corresponds to one language stored in the undefined character code list storing portion 31, e.g., the undefined character code of the language A as shown in Fig. 7(a) (A1 to A16 in Fig. 7(a)) about the first character of the character string.

If it does not correspond (NO at S612), the routine proceeds to S614. If it corresponds (YES at S612), it is considered that a character is defined in the undefined character code of the language A. Therefore, the language of the character is not the language A. For this reason, after identifying that it is not the language A at S613, the routine proceeds to S614.

At S614, it is discriminated whether the first character of the character string corresponds to another language, e.g., the undefined character code (B1 to B6 in Fig. 7(b)) of the language B shown in Fig. 7(b).

If it does not correspond (NO at S614), collation of the next language will be performed. If it corresponds (YES at S614), it means that the character is defined in the undefined character code of the language B, therefore the language of the character is not the language B. For this reason, at S615, it is discriminated that it is not the language B.

Thus, about the first character of the character string, Collation of all of the languages stored in the undefined character code list storing portion 31 with the undefined character code list is performed.

At S616, it is discriminated whether collating with all of the languages about the first character has been completed. If not completed (NO at S616), returning to S612, collating will be continued until completion of collating with all of the languages. If collating with all of the language has been completed about the first character (YES at S616), at S617, it will be discriminated whether the language candidate is narrowed down to one.

If not narrowed down to one candidate (NO at S617), returning to S612, narrowing down of the language candidate by collating processing of S612 to S616 is performed about the character of the second character string. Collating processing will be performed about the character of the third character, the fourth character,...., of the character string until the candidate of language is narrowed down to one.

Thus, since collating with the undefined character code of each language is performed every character of the character string, collating processing and language narrowing down processing can be performed promptly.

At S617, when the language candidate is narrowed down to one (YES at S617), at S618, the language is identified as it is the language of the character string.

In the identification processing shown in Fig. 6, although it is discriminated that the language candidate is the language to be translated at the stage that the language candidate is narrowed down to one. However, the language identification can be performed after completion of collating with the undefined character code list of all of the languages about all of the characters of the character string.

Although an embodiment of the present invention was explained above, the present invention is not limited to the embodiment. For example, although the case in which JavaScript is used as a description language other than HTML is shown above, the present invention is not limited to this.

Furthermore, although the first translation portion 35 and the second translation portion 36 are provided, only one translation portion can be used as the first and second translation portions.

This application claims priority to Japanese Patent Application No. 2004-169042 filed on June 7, 2004, the disclosure of which is incorporated by reference in its entirety.

The terms and expressions which have been employed herein are used as terms of description and not of limitation, and there is no intent, in the use of such terms and expressions, of excluding any of the equivalents of the features shown and described or portions thereof, but it is recognized that various modifications are possible within the scope of the invention claimed.

## Claims

1. A WEB page translation apparatus, comprising:
a description language identification means configured to discriminate whether a translation target portion of a WEB page accessed by a user via a terminal device is described in HTML;
a first translation means configured to translate the character string displayed on the WEB page into another language about the translation target portion discriminated to be described in HTML by the description language identification means; and
a second translation means configured to translate the character string displayed on the WEB page into another language about the translation target portion discriminated not to be described in HTML by the description language identification means.

2. The WEB page translation apparatus as recited in claim 1, further comprising:
a reconstruction means configured to reconstruct the WEB page reflecting the translation result by the first translation means and the second translation means; and
a display control means configured to display the reconstructed WEB page on a display screen of the user terminal.

3. The WEB page translation apparatus as recited in claim 1 or 2, further comprising a user information reflection means configured to deliver information to be given by a user to the portion translated by the second translation means to the access destination in the same condition as giving information in an original WEB page in the WEB page reconstructed and displayed on the display screen of the user terminal.

4. The WEB page translation apparatus as recited in claim 3 , wherein the information given by the user to the portion translated by the second translation means is information on selecting a desired menu from a plurality of menus by specifying a selection button or a selection box provided on the screen of the user terminal corresponding to each menu.

5. The WEB page translation apparatus as recited in claim 3 , wherein the information given by the user to the portion translated by the second translation means is information on selecting a desired menu from a plurality of menus by directly specifying each menu on the screen of the user terminal.

6. The WEB page translation apparatus as recited in claim 3 , wherein the information given by the user to the portion translated by the second translation means is information about the character inputting on the screen of the user terminal.

7. A WEB page translation method, comprising:
a step of discriminating whether a translation target portion of a WEB page accessed by a user via a terminal device is described in HTML;
a first translation step of translating the character string displayed on the WEB page into another language about the translation target portion discriminated to be described in HTML; and
a second translation step of translating the character string displayed on the WEB page into another language about the translation target portion discriminated not to be described in HTML.

8. The WEB page translation method as recited in claim 7, further comprising:
a step of reconstructing the WEB page reflecting the translation result by the first translation step and the second translation step; and
a step of displaying the reconstructed WEB page on a display screen of the user terminal.

9. The WEB page translation method as recited in claim 7 or 8, further comprising a step of delivering information to be given by a user to the portion translated at the second translation step to the access destination in the same condition as giving information in an original WEB page in the WEB page reconstructed and displayed on the display screen of the user terminal.

10. The WEB page translation method as recited in claim 9, wherein the information given by the user to the portion translated at the second translation step is information on selecting a desired menu from a plurality of menus by specifying a selection button or a selection box provided on the screen of the user terminal corresponding to each menu.

11. The WEB page translation method as recited in claim 9, wherein the information given by the user to the portion translated at the second translation step is information on selecting a desired menu from a plurality of menus by directly specifying each menu on the screen of the user terminal.

12. The WEB page translation method as recited in claim 9, wherein the information given by the user to the portion translated at the second translation step is information about the character inputting on the screen of the user terminal.

## Amended claims

### Amended claims under Art. 19.1 PCT

1. (Amended) A WEB page translation apparatus, comprising:
a description language identification means configured to discriminate whether a translation target portion of a WEB page accessed by a user via a terminal device is described in HTML;
a first translation means configured to translate the character string displayed on the WEB page into another language about the translation target portion discriminated to be described in HTML by the description language identification means;
a second translation means configured to translate the character string displayed on the WEB page into another language about the translation target portion discriminated not to be described in HTML by the description language identification means;
a reconstruction means configured to reconstruct the WEB page reflecting the translation result by the first translation means and the second translation means;
a display control means configured to display the reconstructed WEB page on a display screen of the user terminal; and
a user information reflection means configured to deliver information to be given by a user to the portion translated by the second translation means to the access destination in the same condition as giving information in an original WEB page in the WEB page reconstructed and displayed on the display screen of the user terminal.

2. (Deleted)

3. (Deleted)

4. (Amended) The WEB page translation apparatus as recited in claim 1, wherein the information given by the user to the portion translated by the second translation means is information on selecting a desired menu from a plurality of menus by specifying a selection button or a selection box provided on the screen of the user terminal corresponding to each menu.

5. (Amended) The WEB page translation apparatus as recited in claim 1, wherein the information given by the user to the portion translated by the second translation means is information on selecting a desired menu from a plurality of menus by directly specifying each menu on the screen of the user terminal.

6. (Amended) The WEB page translation apparatus as recited in claim 1, wherein the information given by the user to the portion translated by the second translation means is information about the character inputting on the screen of the user terminal.

7. (Amended) A WEB page translation method, comprising:
a step of discriminating whether a translation target portion of a WEB page accessed by a user via a terminal device is described in HTML;
a first translation step of translating the character string displayed on the WEB page into another language about the translation target portion discriminated to be described in HTML;
a second translation step of translating the character string displayed on the WEB page into another language about the translation target portion discriminated not to be described in HTML;
a step of reconstructing the WEB page reflecting the translation result by the first translation step and the second translation step;
a step of displaying the reconstructed WEB page on a display screen of the user terminal; and
a step of delivering information to be given by a user to the portion translated at the second translation step to the access destination in the same condition as giving information in an original WEB page in the WEB page reconstructed and displayed on the display screen of the user terminal.

8. (Deleted)

9. (Deleted)

10. (Amended) The WEB page translation method as recited in claim 7, wherein the information given by the user to the portion translated at the second translation step is information on selecting a desired menu from a plurality of menus by specifying a selection button or a selection box provided on the screen of the user terminal corresponding to each menu.

11. (Amended) The WEB page translation method as recited in claim 7, wherein the information given by the user to the portion translated at the second translation step is information on selecting a desired menu from a plurality of menus by directly specifying each menu on the screen of the user terminal.

12. (Amended) The WEB page translation method as recited in claim 7, wherein the information given by the user to the portion translated at the second translation step is information about the character inputting on the screen of the user terminal.
